# EUROPEAN PATENT APPLICATION

(11) **EP 4 668 803 A1**
(43) Date of publication of application: **24.12.2025**
(21) Application number: 24756026.1
(22) Date of filing: 02.02.2024
(51) Int. Cl.: H04W 8/18

(54) **INFORMATION PROCESSING METHOD AND APPARATUS, INFORMATION TRANSMISSION METHOD AND APPARATUS, AND COMMUNICATION DEVICE**

(30) Priority: 15.02.2023 CN 202310118792
(71) Applicant: Datang Mobile Communications Equipment Co., Ltd., Beijing 100085 (CN)
(72) Inventor: DUAN, Xiaoyan, Beijing 100085 (CN)
(74) Representative: Studio Torta S.p.A.
(86) International application number: PCT/CN2024/075451
(87) International publication number: WO 2024/169652

(57) **Abstract**

The present disclosure provides an information processing and transmission method, apparatus, and communication device, relating to the field of communication technology. The method, executed by a first network function entity, includes: acquiring first information of a terminal from a first device, the first information comprising terminal information; creating or updating an information model of the terminal based on the terminal information; wherein the first device comprises at least one of: a terminal, or a second network function entity different from the first network function entity.

## Description

### CROSS-REFERENCE TO RELATED APPLICATION

This disclosure claims priority to Chinese Patent Application No. 202310118792.1, titled "Information Processing, Transmission Method, Apparatus, and Communication Device", filed with the China National Intellectual Property Administration on February 15, 2023, the entire contents of which are incorporated herein by reference.

### TECHNICAL FIELD

The present disclosure relates to the field of communication technologies, and in particular, to an information processing, transmission method, apparatus, and communication device.

### BACKGROUND

Currently, in mobile communication systems, User Equipment (UE) related information is stored and managed in different network function entities. For example: relatively static UE subscription information is in the Unified Data Management (UDM); UE mobility information (e.g., UE mobility-related capabilities and characteristics) is in the Access and Mobility Management Function (AMF); UE session management information (e.g., UE session management-related capabilities and characteristics) is in the Session Management Function (SMF).

Because UE information is stored dispersedly in the network, this results in the network lacking holistic information about all characteristics of the UE, and thus being unable to exercise more precise, optimized, and intelligent control over the UE.

### SUMMARY

Embodiments of the present disclosure provide an information processing, transmission method, apparatus, and communication device, to solve the problem in related communication networks where UE information is dispersed in various network function entities, making it impossible to exercise more precise, optimized, and intelligent control over the UE.

To solve the above technical problem, an embodiment of the present disclosure provides an information processing method, performed by a first network function entity, comprising:
acquiring first information of a terminal from a first device, the first information comprising terminal information;
creating or updating an information model of the terminal according to the terminal information;
the first device comprising at least one of the following:
   a terminal, a second network function entity different from the first network function entity.

Optionally, the acquiring first information of a terminal from a first device comprises:
receiving a first message sent by the first device, the first message carrying the first information;
wherein the first message is used to create or update terminal information.

Optionally, before the receiving a first message sent by the first device, the method further comprises:
in a case where it is determined that terminal information needs to be acquired, sending a second message to the first device, the second message being used to indicate subscription to or query of terminal information, the second message carrying identification information of the terminal.

Optionally, the second message further comprises at least one of the following:
a type of terminal information;
indication information used to request characteristic information of an environment where the terminal is located.

Optionally, the terminal information comprises at least one of the following:
subscription information of the terminal;
mobility-related information;
session management-related information;
service-related information;
application-related information;
Artificial Intelligence (AI) related information;
Machine Learning (ML) related information.

Optionally, the first information further comprises: characteristic information of an environment where the terminal is located.

Optionally, the method further comprises:
creating or updating an environment simulator of the terminal according to the characteristic information of the environment where the terminal is located, the environment simulator being used to train the information model.

An embodiment of the present disclosure further provides an information transmission method, performed by a first device, comprising:
sending first information of a terminal to a first network function entity, the first information comprising terminal information, the terminal information being used by the first network function entity to create or update an information model of the terminal;
the first device comprising at least one of the following:
   a terminal, a second network function entity different from the first network function entity.

Optionally, the sending first information of a terminal to a first network function entity comprises:
sending a first message to the first network function entity, the first message carrying the first information;
the first message being used to create or update terminal information.

Optionally, before the sending a first message to the first network function entity, the method further comprises:
receiving a second message sent by the first network function entity, the second message being used to indicate subscription to or query of terminal information, the second message carrying identification information of the terminal;
wherein the second message is sent by the first network function entity in a case where it is determined that terminal information needs to be acquired.

Optionally, the second message further comprises at least one of the following:
a type of terminal information;
indication information used to request characteristic information of an environment where the terminal is located.

Optionally, the terminal information comprises at least one of the following:
subscription information of the terminal;
mobility-related information;
session management-related information;
service-related information;
application-related information;
Artificial Intelligence (AI) related information;
Machine Learning (ML) related information.

Optionally, the first information further comprises: characteristic information of an environment where the terminal is located.

An embodiment of the present disclosure further provides an information transmission method, performed by a first network function entity, comprising:
determining second information based on an information model of a target terminal;
sending the second information to a third network function entity, enabling the third network function entity to perform a first operation based on the second information, the second information comprising: terminal information of the target terminal;
wherein the first operation comprises at least one of the following:
   radio access control of the target terminal;
   communication resource control of the target terminal;
   connection control of the target terminal;
   session control of the target terminal;
   task control of the target terminal;
   communication policy control of the target terminal.

Optionally, the sending the second information to a third network function entity comprises:
receiving a third message sent by the third network function entity, the third message being used to request terminal information of the target terminal;
determining the second information based on the third message and the information model of the target terminal;
sending the second information to the third network function entity.

Optionally, the second information further comprises: characteristic information of an environment where the target terminal is located.

An embodiment of the present disclosure further provides an information transmission method, performed by a third network function entity, comprising:
acquiring second information, the second information comprising: terminal information of a target terminal, the second information being determined based on an information model of the target terminal;
performing a first operation according to the second information;
wherein the first operation comprises at least one of the following:
   radio access control of the target terminal;
   communication resource control of the target terminal;
   connection control of the target terminal;
   session control of the target terminal;
   task control of the target terminal;
   communication policy control of the target terminal.

Optionally, the performing a first operation according to the second information comprises:
acquiring third information, the third information comprising: communication resource information and/or communication policy information of the target terminal;
performing the first operation according to the second information and the third information.

Optionally, the second information further comprises: characteristic information of an environment where the target terminal is located.

An embodiment of the present disclosure further provides a communication device, where the communication device is a first network function entity, comprising a memory, a transceiver, and a processor:
the memory, configured to store a computer program;
the transceiver, configured to transmit and receive information under control of the processor;
the processor, configured to read the computer program in the memory and perform the following operations:
acquiring first information of a terminal from a first device, the first information comprising terminal information;
creating or updating an information model of the terminal according to the terminal information;
the first device comprising at least one of the following:
   a terminal, a second network function entity different from the first network function entity.

Optionally, the transceiver is configured to, under control of the processor, transmit and receive information and perform the following operation:
receiving a first message sent by the first device, the first message carrying the first information;
wherein the first message is used to create or update terminal information.

Optionally, the transceiver is configured to, under control of the processor, transmit and receive information and further perform the following operation:
before receiving the first message sent by the first device, in a case where it is determined that terminal information needs to be acquired, sending a second message to the first device, the second message being used to indicate subscription to or query of terminal information, the second message carrying identification information of the terminal.

Optionally, the second message further comprises at least one of the following:
a type of terminal information;
indication information used to request characteristic information of an environment where the terminal is located.

Optionally, the terminal information comprises at least one of the following:
subscription information of the terminal;
mobility-related information;
session management-related information;
service-related information;
application-related information;
Artificial Intelligence (AI) related information;
Machine Learning (ML) related information.

Optionally, the first information further comprises: characteristic information of an environment where the terminal is located.

Optionally, the processor is configured to read the computer program in the memory and further perform the following operation:
creating or updating an environment simulator of the terminal according to the characteristic information of the environment where the terminal is located, the environment simulator being used to train the information model.

An embodiment of the present disclosure further provides a communication device, where the communication device is a first device, comprising a memory, a transceiver, and a processor:
the memory, configured to store a computer program;
the transceiver, configured to, under control of the processor, transmit and receive information and perform the following operation:
   sending first information of a terminal to a first network function entity, the first information comprising terminal information, the terminal information being used by the first network function entity to create or update an information model of the terminal;
   the first device comprising at least one of the following:
      a terminal, a second network function entity different from the first network function entity.

An embodiment of the present disclosure further provides a communication device, where the communication device is a first network function entity, comprising a memory, a transceiver, and a processor:
the memory, configured to store a computer program;
the transceiver, configured to transmit and receive information under control of the processor;
the processor, configured to read the computer program in the memory and perform the following operations:
   determining second information based on an information model of a target terminal;
   sending the second information to a third network function entity, enabling the third network function entity to perform a first operation based on the second information, the second information comprising: terminal information of the target terminal;
   wherein the first operation comprises at least one of the following:
      radio access control of the target terminal;
      communication resource control of the target terminal;
      connection control of the target terminal;
      session control of the target terminal;
      task control of the target terminal;
      communication policy control of the target terminal.

Optionally, the transceiver is configured to, under control of the processor, transmit and receive information and perform the following operations:
receiving a third message sent by the third network function entity, the third message being used to request terminal information of the target terminal;
determining the second information based on the third message and the information model of the target terminal;
sending the second information to the third network function entity.

Optionally, the second information further comprises: characteristic information of an environment where the target terminal is located.

An embodiment of the present disclosure further provides a communication device, where the communication device is a third network function entity, comprising a memory, a transceiver, and a processor:
the memory, configured to store a computer program;
the transceiver, configured to transmit and receive information under control of the processor;
the processor, configured to read the computer program in the memory and perform the following operations:
   acquiring second information, the second information comprising: terminal information of a target terminal, the second information being determined based on an information model of the target terminal;
   performing a first operation according to the second information;
   wherein the first operation comprises at least one of the following:
      radio access control of the target terminal;
      communication resource control of the target terminal;
      connection control of the target terminal;
      session control of the target terminal;
      task control of the target terminal;
      communication policy control of the target terminal.

An embodiment of the present disclosure further provides an information processing apparatus, applied to a first network function entity, comprising:
a first acquisition unit, configured to acquire first information of a terminal from a first device, the first information comprising terminal information;
a first execution unit, configured to create or update an information model of the terminal according to the terminal information;
the first device comprising at least one of the following:
   a terminal, a second network function entity different from the first network function entity.

An embodiment of the present disclosure further provides an information transmission apparatus, applied to a first device, comprising:
a first sending unit, configured to send first information of a terminal to a first network function entity, the first information comprising terminal information, the terminal information being used by the first network function entity to create or update an information model of the terminal;
the first device comprising at least one of the following:
   a terminal, a second network function entity different from the first network function entity.

An embodiment of the present disclosure further provides an information transmission apparatus, applied to a first network function entity, comprising:
a first determination unit, configured to determine second information based on an information model of a target terminal;
a second sending unit, configured to send the second information to a third network function entity, enabling the third network function entity to perform a first operation based on the second information, the second information comprising: terminal information of the target terminal;
wherein the first operation comprises at least one of the following:
   radio access control of the target terminal;
   communication resource control of the target terminal;
   connection control of the target terminal;
   session control of the target terminal;
   task control of the target terminal;
   communication policy control of the target terminal.

An embodiment of the present disclosure further provides an information transmission apparatus, applied to a third network function entity, comprising:
a second acquisition unit, configured to acquire second information, the second information comprising: terminal information of a target terminal, the second information being determined based on an information model of the target terminal;
a second execution unit, configured to perform a first operation according to the second information;
wherein the first operation comprises at least one of the following:
   radio access control of the target terminal;
   communication resource control of the target terminal;
   connection control of the target terminal;
   session control of the target terminal;
   task control of the target terminal;
   communication policy control of the target terminal.

An embodiment of the present disclosure further provides a processor-readable storage medium, storing a computer program, wherein the computer program is used to cause a processor to implement the methods as described above.

An embodiment of the present disclosure further provides a chip, comprising a processor and a communication interface, wherein the communication interface is coupled to the processor, and the processor is configured to run programs or instructions to implement the methods as described above.

An embodiment of the present disclosure further provides a computer program product, stored in a non-transitory storage medium, wherein the computer program product is executed by at least one processor to implement the methods as described above.

### Beneficial Effects of the Present Disclosure:

Through the above solutions, by creating or updating an information model of a terminal based on terminal information, unified management of terminal information is achieved, enabling more precise, optimized, and intelligent control over the terminal.

### BRIEF DESCRIPTION OF THE DRAWINGS

In order to more clearly illustrate the technical solutions in the embodiments of the present disclosure or in the related art, the accompanying drawings used in the description of the embodiments or the related art will be briefly introduced below. Obviously, the drawings in the following description are merely some embodiments recorded in the present disclosure. For those of ordinary skill in the art, other drawings may be obtained from these drawings without creative effort.
Figure 1 shows a schematic flowchart of an information processing method according to an embodiment of the present disclosure;
Figure 2 shows a schematic flowchart of terminal-initiated terminal information update;
Figure 3 shows a schematic flowchart of terminal information update based on a UDTF request;
Figure 4 shows one schematic flowchart of an information transmission method according to an embodiment of the present disclosure;
Figure 5 shows a second schematic flowchart of an information transmission method according to an embodiment of the present disclosure;
Figure 6 shows one schematic interaction flowchart of the terminal and various function entities in the case of terminal-initiated triggering;
Figure 7 shows a second schematic interaction flowchart of the terminal and various function entities in the case of terminal-initiated triggering;
Figure 8 shows one schematic interaction flowchart of the terminal and various function entities in the case of network triggering;
Figure 9 shows a second schematic interaction flowchart of the terminal and various function entities in the case of network triggering;
Figure 10 shows a third schematic flowchart of an information transmission method according to an embodiment of the present disclosure;
Figure 11 shows a schematic unit diagram of an information processing apparatus according to an embodiment of the present disclosure;
Figure 12 shows a structural diagram of a communication device according to an embodiment of the present disclosure;
Figure 13 shows one schematic unit diagram of an information transmission apparatus according to an embodiment of the present disclosure;
Figure 14 shows a second schematic unit diagram of an information transmission apparatus according to an embodiment of the present disclosure;
Figure 15 shows a third schematic unit diagram of an information transmission apparatus according to an embodiment of the present disclosure.

### DETAILED DESCRIPTION

In the following, technical solutions in embodiments of the present disclosure will be described in a clear and thorough manner with reference to the drawings in the embodiments of the present disclosure. Apparently, the described embodiments are merely a part of, rather than all of, the embodiments of the present disclosure. Based on the embodiments of the present disclosure, a person skilled in the art may, without creative effort, obtain other embodiments, all of which shall fall within the scope of the present disclosure.

The terms "first", "second", and the like in the specification and claims of the present disclosure are used to distinguish similar objects and are not necessarily used to describe a specific order or sequence. It should be understood that data used in this way may be interchanged under appropriate circumstances, so that the embodiments of the present disclosure described herein can be implemented in orders other than those illustrated or described herein. Furthermore, the terms "comprise", "include", "have", and any variations thereof are intended to cover a non-exclusive inclusion. For example, a process, method, system, product, or device that comprises a series of steps or units is not necessarily limited to those steps or units expressly listed, but may include other steps or units not expressly listed or inherent to such process, method, product, or device.

The term "and/or" in the embodiments of the present disclosure describes an association relationship between associated objects, indicating that three relationships may exist. For example, "A and/or B" may indicate: the existence of A alone, the simultaneous existence of A and B, or the existence of B alone. The character "/" generally indicates that the associated objects before and after it are in an "or" relationship. The term "plurality" in the embodiments of the present disclosure refers to two or more, and other quantifiers are similar.

In the embodiments of the present disclosure, words such as "exemplary" or "for example" are used to mean serving as an example, illustration, or explanation. Any embodiment or design solution described as "exemplary" or "for example" in the embodiments of the present disclosure should not be construed as being more preferred or advantageous than other embodiments or design solutions. Rather, the use of words such as "exemplary" or "for example" is intended to present the related concepts in a concrete manner.

Embodiments of the present disclosure are described below in conjunction with the accompanying drawings. The information processing, transmission method, apparatus, and communication device provided by the embodiments of the present disclosure may be applied to a wireless communication system. The wireless communication system may be a system employing fifth-generation (5th Generation, 5G) mobile communication technology (hereinafter collectively referred to as a 5G system). Those skilled in the art will understand that the 5G New Radio (NR) system is merely an example and not a limitation.

Based on analysis, embodiments of the present disclosure provide an information processing, transmission method, apparatus, and communication device, to solve the problem in related communication networks where UE information is dispersed in various network function entities, making it impossible to exercise more precise, optimized, and intelligent control over the UE.

The method and apparatus are based on the same inventive concept. Since the principles for solving the problem are similar for the method and the apparatus, the implementation of the apparatus and the method can be cross-referenced, and repeated descriptions will not be provided.

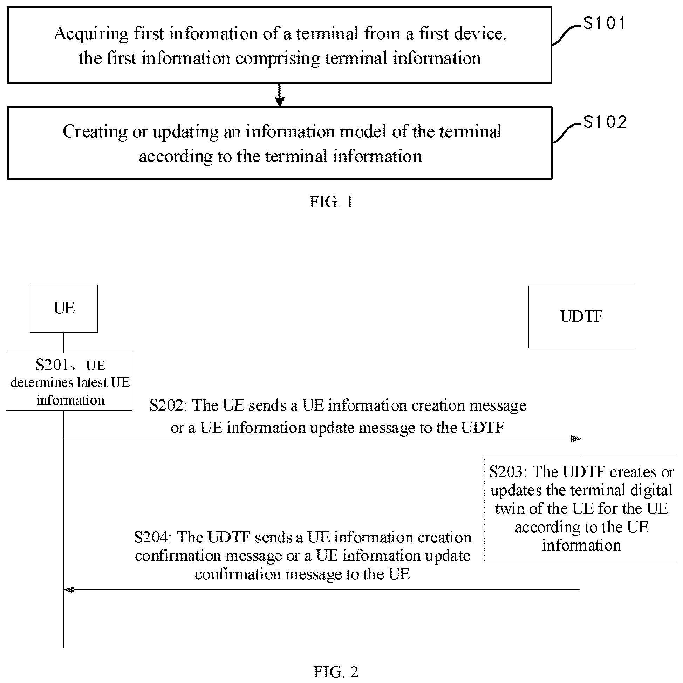

As shown in Figure 1, an embodiment of the present disclosure provides an information processing method, performed by a first network function entity, comprising:
Step S101: Acquiring first information of a terminal from a first device, the first information comprising terminal information;
Step S102: Creating or updating an information model of the terminal according to the terminal information;

Specifically, the first device comprises at least one of the following:
a terminal, a second network function entity different from the first network function entity.

It should be noted that this information model may also be referred to as a terminal information model. It can be understood as: the information model can characterize the full lifecycle process of the terminal, or, the information model is used to characterize the state of the terminal, or, terminal information can be determined from the information model.

For example, in one scenario, this information model can be understood as a model that makes full use of data such as physical models, sensor updates, and operational history, integrates multi-disciplinary, multi-physical quantity, multi-scale, multi-probability simulation processes, and completes the mapping of terminal information in a virtual space. That is, it digitally models the terminal, simulates its operating state, thereby reflecting the full lifecycle process of the terminal. This information model may also be referred to as a terminal digital twin.

It should be noted that the first network function entity mentioned in the embodiments of the present disclosure refers to a UE Digital Twin Function (UDTF) entity. This UDTF entity has the function of simulating multiple characteristics of the terminal, including capabilities, characteristics, states, and/or trends related to the terminal's mobility, session, service/application, Artificial Intelligence (AI)/Machine Learning (ML), etc. For example: terminal location, movement trajectory (direction, speed, etc.); terminal communication duration, frequency, and data volume; services or applications supported and commonly used/currently used by the terminal; types of data collection, model analysis, and inference prediction supported by the terminal; and/or, subscription information of the terminal.

The second network function entity may be an Access Network (AN) device, a Connectivity Management Function (CMF) entity, a Session and Task Management Function (STMF) entity, a Policy and Resource Control Function (PRCF) entity, or another UDTF entity.

It should be noted that the functions of the CMF entity, STMF entity, and PRCF entity are similar to those of the AMF entity, SMF entity, and Policy Control Function (PCF) entity in 5G, respectively, while also having functional extensions. For example, the CMF entity, STMF entity, and PRCF entity may each have a service-based interface with an Access Network (AN) device to exchange information related to terminal access and mobility management, session and task management, and policy and resource control with the AN device.

Optionally, the terminal information in the embodiments of the present disclosure comprises at least one of the following:
A11. Subscription information of the terminal;
A12. Mobility-related information;

For example, it may be mobility-related capabilities, characteristics, states, and/or trends (e.g., terminal location, movement trajectory (direction, speed, etc.)).

### A13. Session management-related information;

For example, it may be session management-related capabilities, characteristics, states, and/or trends (e.g., terminal communication duration, frequency, data volume).

### A14. Service-related information;

For example, it may be service-related capabilities, characteristics, states, and/or trends (e.g., services supported and commonly used/currently used by the terminal).

### A15. Application-related information;

For example, it may be application-related capabilities, characteristics, states, and/or trends (e.g., applications supported and commonly used/currently used by the terminal).

### A16. AI-related information;

For example, it may be AI-related capabilities, characteristics, states, and/or trends (e.g., supporting which types of data collection, model analysis, and inference prediction).

### A17. ML-related information;

For example, it may be ML-related capabilities, characteristics, states, and/or trends (e.g., supporting which types of data collection, model analysis, and inference prediction).

Optionally, in an embodiment of the present disclosure, the first information may further include characteristic information of an environment where a terminal is located, for example, characteristic information of a surrounding environment related to communication of the terminal perceived through a sensor (e.g., indoor/outdoor, signal propagation characteristics, etc.).

Further optionally, the method further includes:
creating or updating an environment simulator of the terminal according to the characteristic information of the environment where the terminal is located, the environment simulator being configured to train the information model.

Optionally, in an embodiment of the present disclosure, the specific implementation manner of acquiring the first information of the terminal from a first device includes:
receiving a first message sent by the first device, the first message carrying the first information;
wherein the first message is used for creating or updating terminal information.

It should be noted that, when the first device determines latest terminal information, it may actively send the first message to a first network function entity, so that the first network function entity creates or updates the information model according to the latest terminal information.

Optionally, in an embodiment of the present disclosure, before the receiving a first message sent by a first device, the method further includes:
sending a second message to the first device in response to determining that terminal information needs to be acquired, the second message being used to indicate subscription to or querying of terminal information, the second message carrying identification information of the terminal.

It should be noted that, in this case, the first network function entity triggers the acquisition of terminal information. At this time, the first network function entity needs to send a message subscribing to or querying terminal information to the first device. The first device determines the latest terminal information, and then sends the terminal information to the first network function entity via the first message; the first network function entity creates or updates the information model according to the latest terminal information.

Optionally, in an embodiment of the present disclosure, the second message further includes at least one of the following:
A21. Type of terminal information;

It should be noted that, in some cases, the first network function entity may only need to update certain types of terminal information. At this time, the first network function entity may carry the type of terminal information when requesting terminal information, which can enable the first device to send terminal information in a targeted manner.

A22. Indication information for requesting characteristic information of an environment where the terminal is located.

After acquiring this indication information, the first device knows that it needs to feed back the characteristic information of the environment where the terminal is located to the first network function entity. When the first device is a second network function entity other than the terminal, the second network function entity may acquire the characteristic information of the environment where the terminal is located from the terminal side, and then send it to the first network function entity.

Below, taking communication between UE and a UDTF entity (hereinafter referred to as UDTF) to create or update a terminal digital twin of the terminal as an example, specific application scenarios of embodiments of the present disclosure are illustrated as follows.

### Application Scenario 1: Terminal triggers creation or update of terminal digital twin of the terminal

As shown in FIG. 2, the specific implementation process includes:
Step S201: UE determines latest UE information, including at least one of A11-A17.

The UE also perceives characteristic information of a surrounding environment related to UE communication (e.g., indoor/outdoor, signal propagation characteristics, etc.) through a sensor to obtain characteristic information of the environment where the UE is located.

Step S202: The UE sends a UE information creation message or a UE information update message to the UDTF, carrying the first information. The first information includes terminal information, which may be the full set or a part of A11-A17, for example, only including the part where information is updated. The first information may also carry characteristic information of the environment where the UE is located.

It should be noted that this UE information creation message or UE information update message corresponds to the aforementioned first message.

Step S203: The UDTF creates or updates the terminal digital twin of the UE for the UE according to the UE information.

It should be noted that if Step S202 also carries characteristic information of the environment where the UE is located, the UDTF may further create or update an environment simulator of the UE for the UE according to this information; the environment simulator of the UE has a function of simulating the surrounding environment of the UE and is used for training the terminal digital twin of the UE.

Step S204: The UDTF sends a UE information creation confirmation message or a UE information update confirmation message to the UE.

Application Scenario 2: UDTF triggers acquisition of terminal information

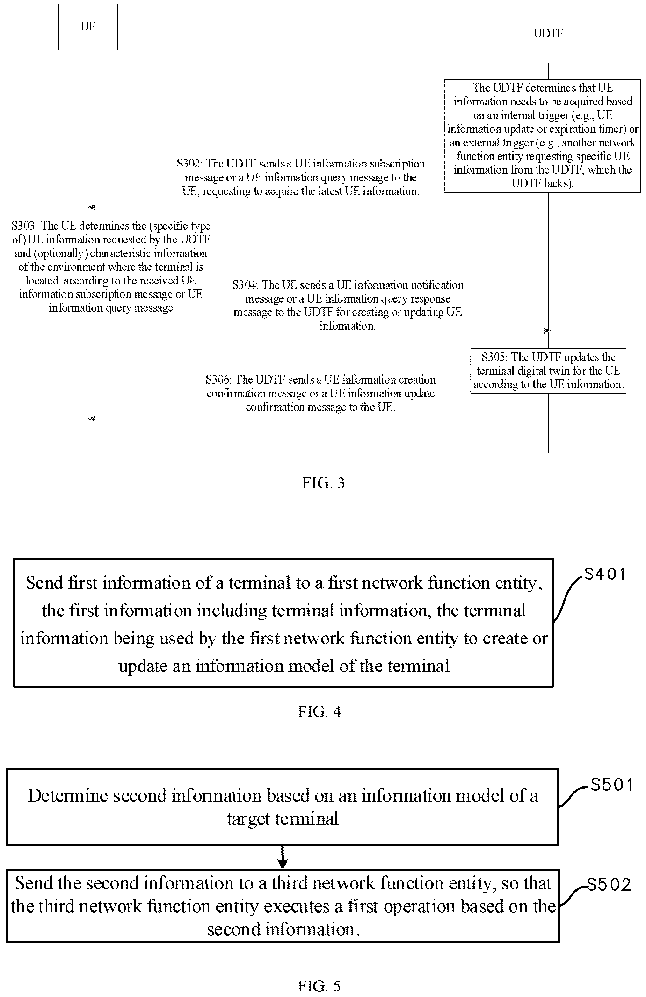

As shown in FIG. 3, the specific implementation process includes:
Step S301: The UDTF determines that UE information needs to be acquired based on an internal trigger (e.g., UE information update or expiration timer) or an external trigger (e.g., another network function entity requesting specific UE information from the UDTF, which the UDTF lacks).
Step S302: The UDTF sends a UE information subscription message or a UE information query message to the UE, requesting to acquire the latest UE information. This message carries identification information of the UE; optionally, this message may also include a type of requested UE information, and indication information for requesting characteristic information of the environment where the terminal is located.
Step S303: The UE determines the (specific type of) UE information requested by the UDTF and (optionally) characteristic information of the environment where the terminal is located, according to the received UE information subscription message or UE information query message.
Step S304: The UE sends a UE information notification message or a UE information query response message to the UDTF for creating or updating UE information. This message carries the (specific type of) UE information requested by the UDTF, and (optionally) characteristic information of the environment where the terminal is located.

It should be noted that this UE information notification message or UE information query response message corresponds to the aforementioned first message.

Specifically, if Step S302 carries the type of requested UE information, the UE information notification message or UE information query response message carries UE information of that type; if Step S302 carries an indication that the UDTF requests characteristic information of the environment where the terminal is located, and the UE has the capability to provide this information, then the UE information notification message or UE information query response message also carries characteristic information of the environment where the terminal is located.

Step S305: The UDTF updates the terminal digital twin for the UE according to the UE information.

Optionally, if Step S304 also carries characteristic information of the environment where the terminal is located, the UDTF may further create or update a surrounding environment simulator of the UE for the UE according to this information.

Step S306: The UDTF sends a UE information creation confirmation message or a UE information update confirmation message to the UE.

It should also be noted that the aforementioned Application Scenario 1 and Application Scenario 2 are described taking the first device as the terminal as an example. When the first device is an AN, CMF, STMF, PRCF, or another UDTF, the specific implementation process is similar to Application Scenario 1 and Application Scenario 2, and details are not repeated herein.

It should be noted that embodiments of the present disclosure store and manage terminal information in a communication network (including static and dynamic UE information, such as mobility, session-related capabilities, characteristics, states, trends, etc.) by a unified network function entity, thereby achieving more accurate, optimized, and intelligent control of the terminal.

The technical solutions provided by embodiments of the present disclosure can be applied to various systems, especially 5G systems. For example, applicable systems may be a Global System for Mobile Communication (GSM) system, Code Division Multiple Access (CDMA) system, Wideband Code Division Multiple Access (WCDMA) system, General Packet Radio Service (GPRS) system, Long Term Evolution (LTE) system, LTE Frequency Division Duplex (FDD) system, LTE Time Division Duplex (TDD) system, Long Term Evolution Advanced (LTE-A) system, Universal Mobile Telecommunications System (UMTS), Worldwide Interoperability for Microwave Access (WiMAX) system, 5th Generation New Radio (5G NR) system, etc. These various systems all include terminal devices and network devices. The systems may also include core network parts, such as an Evolved Packet System (EPS), 5G System (5GS), etc.

The terminal involved in embodiments of the present disclosure, also called a terminal device, may refer to a device that provides voice and/or data connectivity to a user, a handheld device with wireless connection capability, or other processing device connected to a wireless modem. In different systems, the name of the terminal device may also be different. For example, in a 5G system, the terminal device may be called User Equipment (UE). A wireless terminal device may communicate with one or more core networks (CN) via a Radio Access Network (RAN). The wireless terminal device may be a mobile terminal device, such as a mobile phone (or called a "cellular" phone) and a computer with a mobile terminal device. For example, it may be a portable, pocket-sized, handheld, computer-integrated, or vehicle-mounted mobile device that exchanges voice and/or data with the radio access network. For example, a Personal Communication Service (PCS) phone, a cordless phone, a Session Initiation Protocol (SIP) phone, a Wireless Local Loop (WLL) station, a Personal Digital Assistant (PDA), or other devices. The wireless terminal device may also be called a system, a subscriber unit, a subscriber station, a mobile station, a mobile, a remote station, an access point, a remote terminal, an access terminal, a user terminal, a user agent, a user device, which is not limited in embodiments of the present disclosure.

The network device involved in the embodiments of the present disclosure may be a base station. The base station may include multiple cells that provide services to terminals. Depending on the specific application scenario, the base station may be called access point, or may be a device in the access network that communicates over an air interface with wireless terminal devices through one or more sectors, or may be called another name. The network device may be used for converting the received radio frames into Internet protocol (IP) packets or vice versa, and serves as a router between the wireless terminals and the rest of the access network. The rest of the access network may include an IP communication network. The network device may also coordinate the attribute management of the air interface. For example, the network device involved in the embodiments of the present disclosure may be a base transceiver station (BTS) in the global system for mobile communications (GSM) or code division multiple access (CDMA), a NodeB in the wide-band code division multiple access (WCDMA), an evolved Node B (eNB or e-NodeB) in long term evolution (LTE) system, a 5G base station (gNB) in 5G network architecture (next generation system), a home evolved Node B (HeNB), a relay node, a femto, a pico, or the like, which is not limited herein. In some network architectures, the network device may include a centralized unit (CU) node and a distributed unit (DU) node, which may be geographically separated.

An access network device and a terminal may each use one or more antennas for Multi-Input Multi-Output (MIMO) transmission. MIMO transmission may be Single User MIMO (SU-MIMO) or Multiple User MIMO (MU-MIMO). Depending on the form and quantity of root antenna combinations, MIMO transmission may be 2D-MIMO, 3D-MIMO, Full-Dimension MIMO (FD-MIMO), or massive-MIMO, and may also be diversity transmission, precoding transmission, beamforming transmission, or the like.

As shown in FIG. 4, an embodiment of the present disclosure provides an information transmission method, executed by a first device, including:
Step S401: Send first information of a terminal to a first network function entity, the first information including terminal information, the terminal information being used by the first network function entity to create or update an information model of the terminal;

The first device includes at least one of the following:
a terminal, or a second network function entity different from the first network function entity.

Optionally, the sending the first information of the terminal to the first network function entity includes:
sending a first message to the first network function entity, the first message carrying the first information;
the first message being used for creating or updating terminal information.

Optionally, before the sending the first message to the first network function entity, the method further includes:
receiving a second message sent by the first network function entity, the second message being used to indicate subscription to or querying of terminal information, the second message carrying identification information of the terminal;
wherein the second message is sent by the first network function entity upon determining that terminal information needs to be acquired.

Optionally, the second message further includes at least one of the following:
a type of terminal information;
indication information for requesting characteristic information of an environment where the terminal is located.

Optionally, the terminal information includes at least one of the following:
subscription information of the terminal;
mobility-related information;
session management-related information;
service-related information;
application-related information;
Artificial Intelligence (AI)-related information;
Machine Learning (ML)-related information.

Optionally, the first information further includes: characteristic information of an environment where the terminal is located.

It should be noted that all implementation manners in the foregoing embodiments are applicable to this embodiment of the information transmission method applied to the first device side and can achieve the same technical effects, which are not repeated herein.

As shown in FIG. 5, an embodiment of the present disclosure provides an information transmission method, executed by a first network function entity, including:
Step S501: Determine second information based on an information model of a target terminal;
   It should be noted that the manner of creating or updating the terminal digital twin of the target terminal refers to the foregoing embodiments, and details are not repeated herein.
It should be noted that the second information includes: terminal information of the target terminal;
   Step S502: Send the second information to a third network function entity, so that the third network function entity executes a first operation based on the second information.

Specifically, the first operation includes at least one of the following:
B11. Radio access control for the target terminal;
B12. Communication resource control for the target terminal;
B13. Connection control for the target terminal;
B14. Session control for the target terminal;
B15. Task control for the target terminal;
B16. Communication policy control for the target terminal.

It should be noted that the first network function entity mentioned in the embodiments of the present disclosure refers to a UDTF entity. This UDTF entity has the function of simulating various characteristics of a terminal, including capabilities, characteristics, states, and/or trends related to the terminal's mobility, sessions, services/applications, AI/ML, etc. For example: terminal location, movement trajectory (direction, speed, etc.); terminal communication duration, frequency, and data volume; services or applications supported and commonly used/currently used by the terminal; types of data collection, model analysis, and inference prediction supported by the terminal; and/or subscription information of the terminal, etc.

The third network function entity may be an AN device, a CMF entity, an STMF entity, or a PRCF entity. Specifically, when the third network function entity is an AN device, the third network function entity performs radio access control and radio resource control for the target terminal (it should be noted that radio resource control belongs to communication resource control); when the third network function entity is a CMF (Connectivity Management Function) entity, the third network function entity performs connection control for the target terminal; when the third network function entity is an STMF (Session and Task Management Function) entity, the third network function entity performs session control and/or task control for the target terminal; when the third network function entity is a PRCF (Policy and Resource Control Function) entity, the third network function entity performs communication resource control and/or communication policy control for the target terminal.

Optionally, in an embodiment of the present disclosure, the sending the second information to the third network function entity includes:
Step S5021: Receive a third message sent by the third network function entity, the third message being used to request terminal information of the target terminal;
Step S5022: Determine the second information based on the third message and the information model of the target terminal;
Step S5023: Send the second information to the third network function entity.

Optionally, when the third network function entity is an AN device, the third message may be understood as a terminal context request message. Furthermore, after acquiring the second information, the first network function entity may send the second information to the AN device via a terminal context response message.

It should be noted that if, during subsequent communication, the AN device can send the second information to the CMF entity, STMF entity, and/or PRCF entity, then the CMF entity, STMF entity, and/or PRCF entity do not need to acquire the second information again from the first network function entity. If the AN device does not send the second information to the CMF entity, STMF entity, and/or PRCF entity, then the CMF entity, STMF entity, or PRCF entity still needs to acquire the second information from the first network function entity to assist in determining relevant information. Specifically:
The CMF entity determines terminal connection-related control parameters;
The STMF entity determines UE session-related control parameters and/or task-related control parameters;
The PRCF entity determines communication resource information and/or communication policy information.

Optionally, in an embodiment of the present disclosure, when the third network function entity is an AN device, CMF entity, or STMF entity, the implementation manner of the third network function entity executing the first operation according to the second information includes:
Acquiring third information, the third information including: communication resource information and/or communication policy information of the target terminal;
Executing the first operation according to the second information and the third information.

For example:
When the third network function entity is an AN device, the third information is usually acquired from the PRCF entity;
When the third network function entity is a CMF entity, the third information is usually acquired from the PRCF entity or the AN device;
When the third network function entity is an STMF entity, the third information is usually acquired from the PRCF entity, AN device, or CMF entity.

Optionally, in an embodiment of the present disclosure, when the third network function entity is a PRCF entity, the implementation manner of sending the second information to the third network function entity includes:
Upon determining that communication resources and/or communication policies of the target terminal need to be updated, the first network function entity sends the second information to the third network function entity. The third network function entity determines new communication resource information and/or communication policy information for the terminal based on this second information and controls the terminal based on the new communication resource information and/or communication policy information. Optionally, the first network function entity may send the second information to the PRCF entity via a terminal resource and/or policy update request message.

Optionally, the terminal information mentioned in the embodiments of the present disclosure includes at least one of the following:
B21. Subscription information of the terminal;
B22. Mobility-related information;

For example, mobility-related capabilities, characteristics, states, and/or trends (e.g., terminal location, movement trajectory (direction, speed, etc.)).

### B23. Session management-related information;

For example, session management-related capabilities, characteristics, states, and/or trends (e.g., terminal communication duration, frequency, data volume).

### B24. Service-related information;

For example, service-related capabilities, characteristics, states, and/or trends (e.g., services supported and commonly used/currently used by the terminal).

### B25. Application-related information;

For example, application-related capabilities, characteristics, states, and/or trends (e.g., applications supported and commonly used/currently used by the terminal).

### B26. AI-related information;

For example, AI-related capabilities, characteristics, states, and/or trends (e.g., types of data collection, model analysis, and inference prediction supported).

### B27. ML-related information;

For example, ML-related capabilities, characteristics, states, and/or trends (e.g., types of data collection, model analysis, and inference prediction supported).

Optionally, in the embodiments of the present disclosure, the second information further includes: characteristic information of the environment where the target terminal is located. For example, characteristic information of the surrounding environment related to terminal communication perceived through a sensor (e.g., indoor/outdoor, signal propagation characteristics, etc.).

Below, the communication process between a UE, a UDTF entity (hereinafter referred to as UDTF), an AN device (hereinafter referred to as AN), a CMF entity (hereinafter referred to as CMF), an STMF entity (hereinafter referred to as STMF), and a PRCF entity (hereinafter referred to as PRCF) in specific applications of the embodiments of the present disclosure is illustrated as follows.

### Application Scenario 3: UE-Initiated Connection (or Session/Task) Establishment Procedure

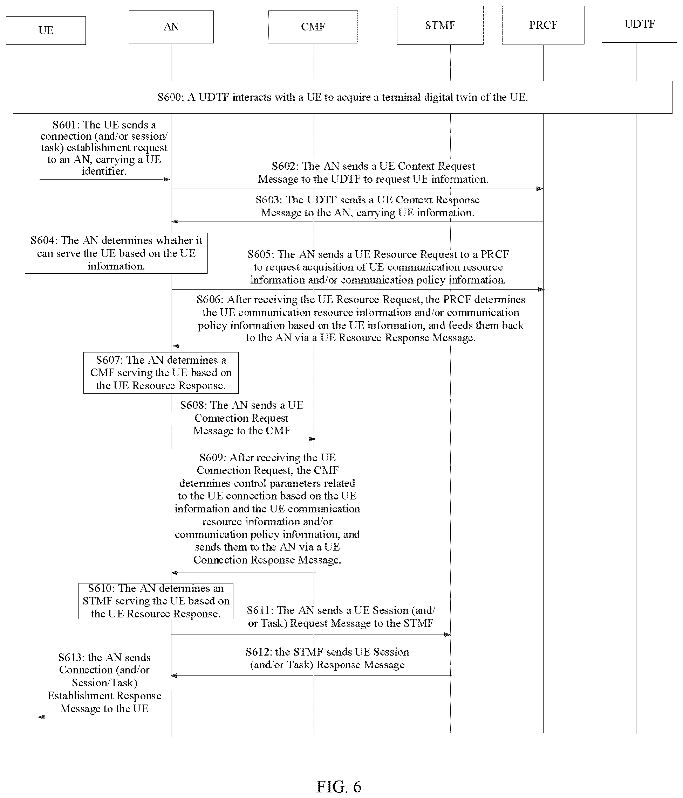

As shown in FIG. 6, the specific implementation process comprises:
Step S600: A UDTF interacts with a UE to acquire a terminal digital twin of the UE.

The creation or update process of the terminal digital twin of the UE may refer to Application Scenario I or Application Scenario II described above.

Step S601: The UE sends a connection (and/or session/task) establishment request to an AN, carrying a UE identifier.

Step S602: The AN sends a UE Context Request Message to the UDTF to request UE information.

Step S603: The UDTF sends a UE Context Response Message to the AN, carrying UE information.

Step S604: The AN determines whether it can serve the UE based on the UE information.

For example:
a) The AN determines whether it can serve the UE (including whether it can ensure Quality of Service (QoS) or Quality of Experience (QoE) in high-speed mobility scenarios of the UE, and whether it covers the UE's movement area within a certain period) based on characteristics such as high-speed mobility of the UE and the UE's movement trajectory/trend;
b) The AN determines whether it supports capabilities required by services currently used by the UE (e.g., vehicle-to-everything services), thereby determining whether it can serve the UE.

If the AN can serve the UE, the AN proceeds to perform Step S605; otherwise, the AN performs AN reselection, selects a new AN capable of serving the UE, sends the UE information to the new AN, and the new AN proceeds to perform Step S605.

It should be noted that this Step S604 may also be executed after Step S606 or Step S607. That is: The AN determines whether it can serve the UE based on the UE information and/or UE communication resource information and/or communication policy information. The case where the AN determines whether it can serve the UE based on UE information is described above. The AN determines whether it can serve the UE based on the UE communication resource information and/or communication policy information, for example: The AN determines whether it can access a CMF or STMF serving the UE, or whether it can provide access network resources that ensure QoS/QoE for UE services or applications, thereby determining whether it can serve the UE. If the AN can serve the UE, the AN proceeds to perform Step S607 or Step S608; otherwise, the AN performs AN reselection, selects a new AN capable of serving the UE, sends the UE information and UE communication resource and policy information to the new AN, and the new AN proceeds to perform Step S607 or Step S608.

Step S605: The AN sends a UE Resource Request to a PRCF to request acquisition of UE communication resource information and/or communication policy information. This UE Resource Request Message carries the UE identifier and may also carry UE information.

Step S606: After receiving the UE Resource Request, the PRCF determines the UE communication resource information and/or communication policy information based on the UE information, and feeds them back to the AN via a UE Resource Response Message. If the UE Resource Request Message does not carry UE information, the PRCF may request UE information from the UDTF. The UE communication resource information and/or communication policy information includes parameters such as: a CMF serving the UE, an STMF, other UEs (used for direct communication or relaying between UEs), and/or resource requirements (e.g., frequency, bandwidth, latency, reliability) for UE connection, session, and/or task.

Step S607: The AN determines a CMF serving the UE based on the UE Resource Response.

Step S608: The AN sends a UE Connection Request Message to the CMF, carrying the UE identifier, and may also carry UE information and/or UE communication resource information and/or communication policy information.

Step S609: After receiving the UE Connection Request, the CMF determines control parameters related to the UE connection based on the UE information and the UE communication resource information and/or communication policy information, and sends them to the AN via a UE Connection Response Message. If the UE Connection Request does not carry UE information, the CMF may request UE information from the UDTF. If the UE Connection Request does not carry UE communication resource information and/or communication policy information, the CMF may request UE communication resource information and/or communication policy information from the PRCF.

The CMF sends the UE Connection Response to the AN, carrying control parameters related to the UE connection.

It should be noted that if the UE sends a connection establishment request (rather than a session or task request) in Step S601, the following Steps S610-S612 may not be executed.

Step S610: The AN determines an STMF serving the UE based on the UE Resource Response.

Step S611: The AN sends a UE Session (and/or Task) Request Message to the STMF, carrying the UE identifier, and may also carry UE information and/or UE communication resource information and/or communication policy information.

Step S612: After receiving the UE Session (and/or Task) Request Message, the STMF determines control parameters related to the UE session (and/or task) based on the UE information and the UE communication resource information and/or communication policy information, and sends them to the AN via a UE Session (and/or Task) Response Message. If the UE Session (and/or Task) Request does not carry UE information, the STMF may request UE information from the UDTF. If the UE Session (and/or Task) Request does not carry UE communication resource information and/or communication policy information, the STMF may request UE communication resource information and/or communication policy information from the PRCF.

Step S613: The AN determines radio access and radio resource configuration parameters for the UE based on the UE information, connection control parameters, session (and/or task) control parameters, and/or UE communication resource information and/or communication policy information, and sends them to the terminal via a Connection (and/or Session/Task) Establishment Response Message. This Connection (and/or Session/Task) Establishment Response Message carries the radio access and radio resource configuration parameters of the UE, as well as control parameters related to the connection (and/or session/task). The UE and the network complete the establishment of the connection (and/or session/task).

### Application Scenario 4: UE-Initiated Connection (or Session/Task) Establishment Procedure

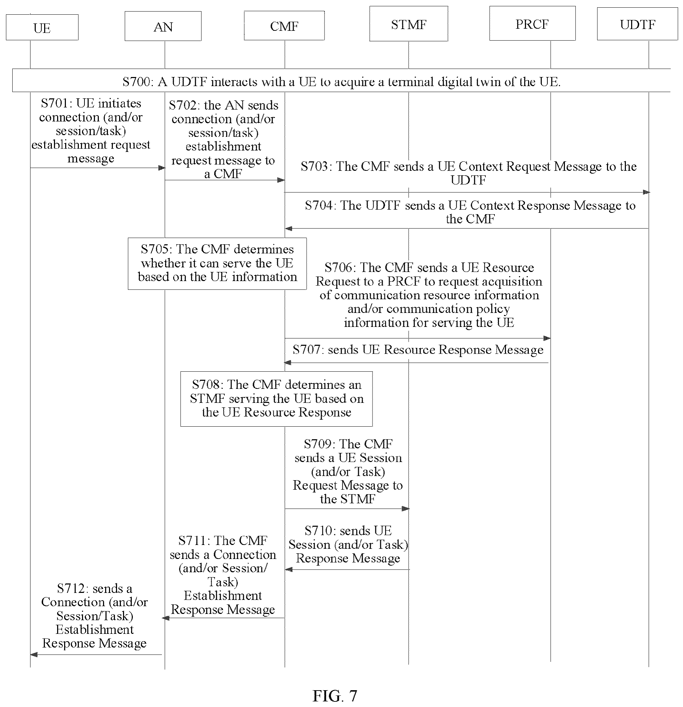

As shown in FIG. 7, the specific implementation process comprises:
Step S700: A UDTF interacts with a UE to acquire a terminal digital twin of the UE.

The creation or update process of the terminal digital twin of the UE may refer to Application Scenario 1 or Application Scenario 2 described above.

Step S701-S702: The UE sends a connection (and/or session/task) establishment request message to a CMF via an AN, carrying a UE identifier.

Step S703: The CMF sends a UE Context Request Message to the UDTF to request UE information.

Step S704: The UDTF sends a UE Context Response Message to the CMF, carrying UE information.

Step S705: The CMF determines whether it can serve the UE based on the UE information.

For example:
a) The CMF determines whether its service area can cover the UE's movement area within a certain period based on the UE's movement trajectory/trend;
b) The CMF determines whether it supports capabilities required by services currently used by the UE (e.g., vehicle-to-everything services), thereby determining whether it can serve the UE.

If the CMF can serve the UE, the CMF proceeds to perform Step S706; otherwise, the CMF performs CMF reselection, selects a new CMF capable of serving the UE, sends the UE information to the new CMF, and the new CMF proceeds to perform Step S706.

It should be noted that this Step S705 may also be executed after Step S707. That is: The CMF determines whether it can serve the UE based on the UE information and the UE communication resource information and/or communication policy information. The case where the CMF determines whether it can serve the UE based on UE information is described above. The CMF determines whether it can serve the UE based on the UE communication resource information and/or communication policy information, for example: The CMF determines whether it is in a CMF list capable of serving the UE provided by the PRCF, or whether it can provide network resources supporting connection establishment for the UE, thereby determining whether it can serve the UE. If the CMF can serve the UE, the CMF proceeds to perform Step S708; otherwise, the CMF performs CMF reselection, selects a new CMF capable of serving the UE, sends the UE information and UE communication resource and policy information to the new CMF, and the new CMF proceeds to perform Step S708.

Step S706: The CMF sends a UE Resource Request to a PRCF to request acquisition of communication resource information and/or communication policy information for serving the UE. This UE Resource Request Message carries the UE identifier and may also carry UE information.

Step S707: After receiving the UE Resource Request, the PRCF determines the UE communication resource information and/or communication policy information based on the UE information, and sends them via a UE Resource Response Message. If the UE Resource Request Message does not carry UE information, the PRCF may request UE information from the UDTF. The UE communication resource information and/or communication policy information includes parameters such as: a CMF serving the UE, an STMF, other UEs (used for direct communication or relaying between UEs), and/or resource requirements (e.g., frequency, bandwidth, latency, reliability) for UE connection, session, and/or task.

If the UE sends a connection establishment request (rather than a session or task request) in Step S701, the following Steps S708-S710 may not be executed.

Step S708: The CMF determines an STMF serving the UE based on the UE Resource Response.

Step S709: The CMF sends a UE Session (and/or Task) Request Message to the STMF, carrying the UE identifier, and may also carry UE information and/or UE communication resource information and/or communication policy information.

Step S710: After receiving the UE Session (and/or Task) Request, the STMF determines control parameters related to the UE session (and/or task) based on the UE information and the UE communication resource information and/or communication policy information, and sends them via a UE Session (and/or Task) Response Message. If the UE Session (and/or Task) Request does not carry UE information, the STMF may request UE information from the UDTF. If the UE Session (and/or Task) Request does not carry UE communication resource information and/or communication policy information, the STMF may request UE communication resource information and/or communication policy information from the PRCF.

Step S711-S712: The CMF determines control parameters related to the UE connection based on the UE information and/or UE communication resource information and/or communication policy information. The CMF sends a Connection (and/or Session/Task) Establishment Response Message to the UE via the AN. This Connection (and/or Session/Task) Establishment Response Message carries control parameters related to the UE connection (and/or session/task).

### Application Scenario 5: Implementation Manner 1 of Network-Initiated Connection (or Session/Task) Establishment Procedure

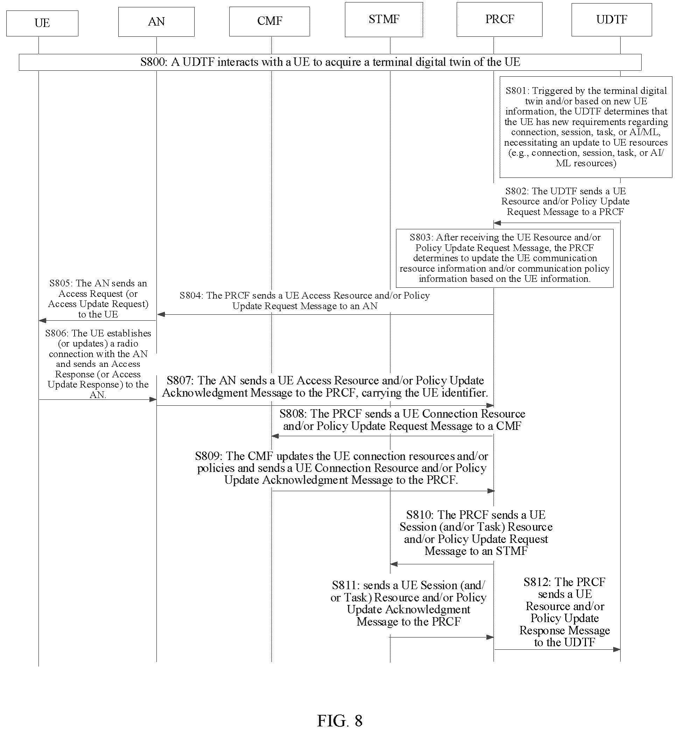

As shown in FIG. 8, the specific implementation process comprises:
Step S800: A UDTF interacts with a UE to acquire a terminal digital twin of the UE.

The creation or update process of the terminal digital twin of the UE may refer to Application Scenario I or Application Scenario II described above.

Step S801: Triggered by the terminal digital twin and/or based on new UE information, the UDTF determines that the UE has new requirements regarding connection, session, task, or AI/ML, necessitating an update to UE resources (e.g., connection, session, task, or AI/ML resources). For example: When the UE moves to a new communication environment, the terminal digital twin determines new (optimized) UE connection, session, task, or AI/ML requirement parameters, thereby prompting the UDTF to determine that UE communication resources and/or communication policies need updating.

Step S802: The UDTF sends a UE Resource and/or Policy Update Request Message to a PRCF, carrying (updated) UE information and optionally carrying suggested UE communication resource information and/or communication policy information, to request an update to the UE's communication resources and/or communication policies.

Step S803: After receiving the UE Resource and/or Policy Update Request Message, the PRCF determines to update the UE communication resource information and/or communication policy information based on the UE information. That is: The PRCF determines new parameters such as an AN, CMF, STMF, or other UEs (used for direct communication or relaying between UEs) serving the UE, and/or resource or QoS/QoE requirements (e.g., frequency, bandwidth, latency, reliability) for UE connection, session, and/or task.

Step S804: The PRCF sends a UE Access Resource and/or Policy Update Request Message to an AN, carrying updated access-network-related communication resource information and/or communication policy information of the UE, such as access network resource requirements (e.g., frequency, transmission rate, latency, reliability) for UE connection, session, and/or task. The AN performs (/updates) access management for the UE based on the updated access-network-related resource and/or policy information of the UE, for example: reselecting an access network slice serving the UE, adjusting UE access management parameters (e.g., radio access technology/frequency selection priority), or adjusting access network resource control parameters (e.g., QoS/QoE parameters such as frequency, transmission rate, latency, reliability; service authorization parameters) for the UE's session and/or task.

Step S805: The AN sends an Access Request (or Access Update Request) to the UE, carrying a UE identifier and (updated) access network resource information (e.g., access network slice identifier, frequency, radio access parameters).

Step S806: The UE establishes (or updates) a radio connection with the AN and sends an Access Response (or Access Update Response) to the AN.

Step S807: The AN sends a UE Access Resource and/or Policy Update Acknowledgment Message to the PRCF, carrying the UE identifier.

Step S808: The PRCF sends a UE Connection Resource and/or Policy Update Request Message to a CMF, carrying updated connection-related communication resource information and/or communication policy information of the UE, such as network slices, subnets, areas, or services/applications that the UE is permitted or forbidden to access and use.

Step S809: The CMF updates the UE connection resources and/or policies and sends a UE Connection Resource and/or Policy Update Acknowledgment Message to the PRCF. The CMF performs (/updates) mobility management for the UE based on the updated UE connection resources and/or policies, for example: reselecting a core network slice serving the UE or adjusting UE core network connection management parameters (e.g., congestion backoff timer).

Step S810: The PRCF sends a UE Session (and/or Task) Resource and/or Policy Update Request Message to an STMF, carrying updated session (and/or task)-related communication resource information and/or communication policy information of the UE, such as QoS/QoE requirements (e.g., transmission rate, latency, reliability) for the UE session (and/or task), or services or applications permitted or forbidden for use (i.e., service authorization parameters).

Step S811: The STMF updates the session (and/or task)-related communication resources and/or communication policies of the UE and sends a UE Session (and/or Task) Resource and/or Policy Update Acknowledgment Message to the PRCF. The STMF performs (/updates) session (and/or task) management for the UE based on the updated session (and/or task)-related communication resources and policies, for example: (triggering) reselection of session (and/or task)-related functional entities serving the UE, or adjusting UE session (and/or task) management parameters (e.g., QoS/QoE parameters, service authorization parameters).

Step S812: The PRCF sends a UE Resource and/or Policy Update Response Message to the UDTF, carrying the result (success or failure; if failure, may also carry the failure reason) of the UE communication resource and/or communication policy update.

Application Scenario 6: Implementation Manner 2 of Network-Initiated Connection (or Session/Task) Establishment Procedure

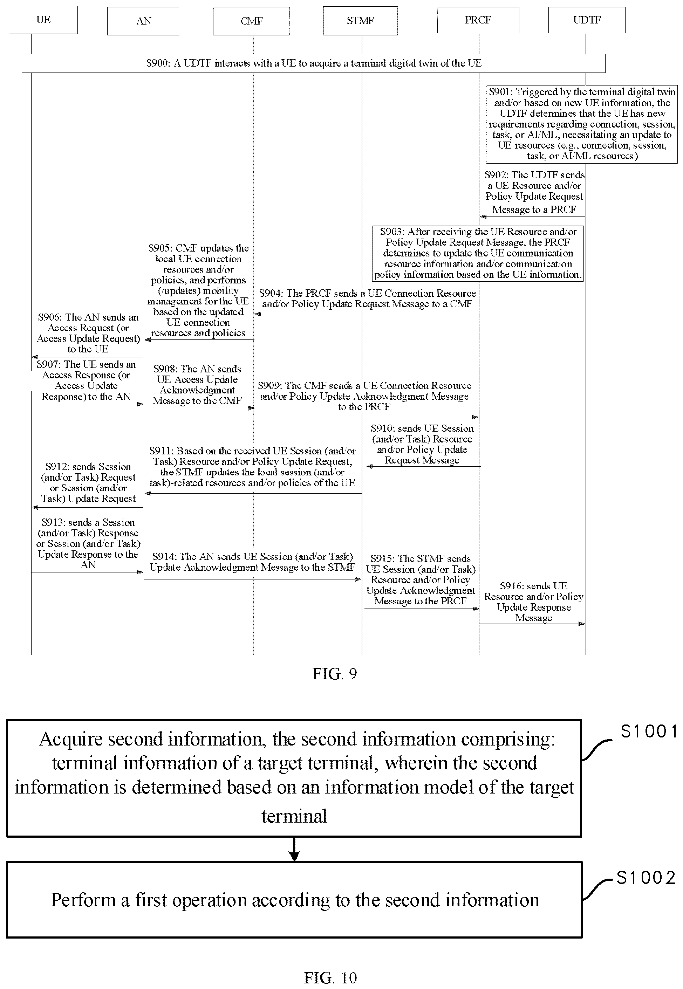

As shown in FIG. 9, the specific implementation process comprises:
Steps S900-S903: Refer to Steps S800-S803 described above.
Step S904: The PRCF sends a UE Connection Resource and/or Policy Update Request Message to a CMF, carrying updated connection-related communication resource information and/or communication policy information of the UE, such as: resource requirements related to the UE connection (e.g., frequency), and network slices, subnets, areas, or services/applications that the UE is permitted or forbidden to access and use.
Step S905: Based on the received UE Connection Resource and/or Policy Update Request Message, the CMF updates the local UE connection resources and/or policies. The CMF performs (/updates) mobility management for the UE based on the updated UE connection resources and policies, for example: reselecting a network slice serving the UE, adjusting UE core network connection management parameters (e.g., congestion backoff timer), or adjusting UE access management parameters (e.g., Radio Access Technology/Frequency Selection Priority Index value - RFSP Index). The CMF sends a UE Access Update Request to an AN, carrying UE access information requested for update, such as: resource requirements for UE access (e.g., frequency), and network slices, subnets, areas, or services/applications that the UE is permitted or forbidden to access and use.
Step S906: The AN sends an Access Request (or Access Update Request) to the UE, carrying the UE identifier and updated access resource information (e.g., frequency, radio access parameters).
Step S907: The UE sends an Access Response (or Access Update Response) to the AN, establishing (or updating) a radio connection between the UE and the AN.
Step S908: The AN sends a UE Access Update Acknowledgment Message to the CMF, carrying the UE identifier.
Step S909: The CMF sends a UE Connection Resource and/or Policy Update Acknowledgment Message to the PRCF.
Step S910: The PRCF sends a UE Session (and/or Task) Resource and/or Policy Update Request Message to an STMF, carrying updated session (and/or task)-related communication resource information and/or communication policy information of the UE, such as: QoS/QoE requirements (e.g., transmission rate, latency, reliability) for the UE session (and/or task), and services or applications permitted or forbidden for use.
Step S911: Based on the received UE Session (and/or Task) Resource and/or Policy Update Request, the STMF updates the local session (and/or task)-related resources and/or policies of the UE. The STMF performs (/updates) session (and/or task) management for the UE based on the updated session (and/or task)-related communication resources and/or communication policies, for example: (triggering) reselection of session (and/or task)-related functional entities serving the UE, or adjusting UE session (and/or task) management parameters (e.g., QoS/QoE parameters, service authorization parameters). The STMF sends a UE Session (and/or Task) Update Request to the AN, carrying UE session (and/or task) information requested for update, such as: QoS/QoE requirements (e.g., transmission rate, latency, reliability) for the UE session (and/or task), and services or applications permitted or forbidden for use.
Step S912: The AN sends a Session (and/or Task) Request or Session (and/or Task) Update Request to the UE, carrying the UE identifier and (updated) radio resource information for the UE session (and/or task).
Step S913: The UE creates (or updates) radio resources for the UE session (and/or task) and sends a Session (and/or Task) Response or Session (and/or Task) Update Response to the AN.
Step S914: The AN sends a UE Session (and/or Task) Update Acknowledgment Message to the STMF, carrying the UE identifier.
Step S915: The STMF sends a UE Session (and/or Task) Resource and/or Policy Update Acknowledgment Message to the PRCF.
Step S916: The PRCF sends a UE Resource and/or Policy Update Response Message to the UDTF, carrying the result (success or failure; if failure, may also carry the failure reason) of the UE resource and/or policy update.

It should be noted that: The embodiments of the present disclosure enable centralized storage and management of terminal information (including static and dynamic UE information, such as mobility, session-related capabilities, characteristics, states, trends, etc.) within the communication network by a unified network function entity. This triggers dynamic adjustments of UE resources/policies, thereby realizing more precise, optimized, and intelligent control of terminals and reducing the signaling interactions required among internal network function entities to acquire diverse terminal information.

As shown in FIG. 10, an embodiment of the present disclosure provides an information transmission method, executed by a third network function entity, comprising:
Step S1001: Acquire second information, the second information comprising: terminal information of a target terminal, wherein the second information is determined based on an information model of the target terminal.
Step S1002: perform a first operation according to the second information;
Wherein the first operation comprises at least one of the following:
Wireless access control of the target terminal;
Communication resource control of the target terminal;
Connection control of the target terminal;
Session control of the target terminal;
Task control of the target terminal;
Communication policy control of the target terminal.

Optionally, the executing the first operation according to the second information comprises:
Acquiring third information, the third information comprising: communication resource information and/or communication policy information of the target terminal;
Executing the first operation according to the second information and the third information.

Optionally, the second information further comprises: characteristic information of an environment where the target terminal is located.

It should be noted that: All implementation manners in the foregoing embodiments are applicable to this embodiment of the information transmission method applied to the third network function entity side, and can achieve the same technical effects. Details are not repeated here.

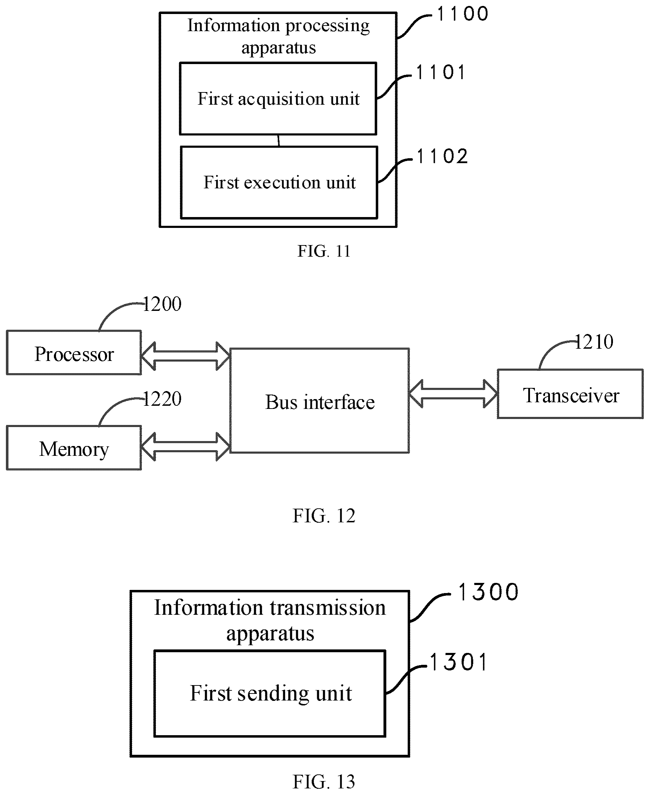

As shown in FIG. 11, an embodiment of the present disclosure provides an information processing apparatus 1100, applied to a first network function entity, comprising:
A first acquisition unit 1101, configured to acquire first information of a terminal from a first device, the first information comprising terminal information;
A first execution unit 1102, configured to create or update an information model of the terminal according to the terminal information;
The first device comprises at least one of the following:
   A terminal, or a second network function entity different from the first network function entity.

Optionally, the first acquisition unit 1101 is configured to:
Receive a first message sent by the first device, the first message carrying the first information;
Wherein the first message is used to create or update terminal information.

Optionally, before the first acquisition unit 1101 receives the first message sent by the first device, the apparatus further comprises:
A third sending unit, configured to, upon determining that terminal information needs to be acquired, send a second message to the first device, the second message being used to indicate subscription to or query of terminal information, and the second message carrying identification information of the terminal.

Optionally, the second message further comprises at least one of the following:
A type of the terminal information;
Indication information for requesting characteristic information of an environment where the terminal is located.
Optionally, the terminal information comprises at least one of the following:
Subscription information of the terminal;
Mobility-related information;
Session management-related information;
Service-related information;
Application-related information;
Artificial intelligence (AI)-related information;
Machine learning (ML)-related information.

Optionally, the first information further comprises: characteristic information of an environment where the terminal is located.

Optionally, the apparatus further comprises:
A third execution unit, configured to update or create an environment simulator of the terminal according to the characteristic information of the environment where the terminal is located, the environment simulator being used to train the information model.

It should be noted that: The division of units in the embodiments of the present disclosure is schematic, merely representing a logical functional division. Actual implementations may adopt other division methods. In addition, functional units in various embodiments of the present disclosure may be integrated into one processing unit, or each unit may exist physically alone, or two or more units may be integrated into one unit. The above integrated units may be implemented in the form of hardware or software functional units.

If the integrated unit is implemented in the form of a software functional unit and sold or used as an independent product, it may be stored in a processor-readable storage medium. Based on this understanding, the technical solution of the present disclosure, in essence, or the part contributing to the related art, or all or part of the technical solution may be embodied in the form of a software product. The computer software product is stored in a storage medium and comprises instructions for causing a computer device (which may be a personal computer, server, network device, etc.) or a processor to execute all or part of the steps of the methods described in the various embodiments of the present disclosure. The aforementioned storage medium includes various media that can store program codes, such as: U disk, mobile hard disk, Read-Only Memory (ROM), Random Access Memory (RAM), magnetic disk, or optical disk.

As shown in FIG. 12, an embodiment of the present disclosure further provides a communication device, wherein the communication device is a first network function entity, comprising a processor 1200, a transceiver 1210, a memory 1220, and a program stored in the memory 1220 and executable on the processor 1200.

The transceiver 1210 is connected to the processor 1200 and the memory 1220 via a bus interface.

The processor 1200 is configured to read the program in the memory and implement the following processes:
Acquiring first information of a terminal from a first device, the first information comprising terminal information;
Creating or updating an information model of the terminal according to the terminal information;
The first device comprises at least one of the following:
   A terminal, or a second network function entity different from the first network function entity.

The transceiver 1210 is configured to receive and transmit data under the control of the processor 1200.

In FIG. 12, the bus architecture may include any number of interconnected buses and bridges, specifically linking together various circuits represented by one or more processors exemplified by the processor 1200 and a memory represented by the memory 1220. The bus architecture may also link together various other circuits such as peripherals, voltage regulators, and power management circuits. These are well-known in the art and therefore will not be further described herein. A bus interface provides the interface. The transceiver 1210 may be multiple elements, namely including a transmitter and a receiver, providing units for communicating with various other apparatuses over transmission media. These transmission media include, but are not limited to, wireless channels, wired channels, optical cables, and other transmission media. For different user equipment, the user interface may also be an interface capable of connecting external or internal devices as needed. Connected devices include, but are not limited to, keypads, displays, speakers, microphones, joysticks, etc.

The processor 1200 is responsible for managing the bus architecture and general processing. The memory 1220 may store data used by the processor 1200 when performing operations.

Optionally, the processor 1200 may be a Central Processing Unit (CPU), an Application Specific Integrated Circuit (ASIC), a Field-Programmable Gate Array (FPGA), or a Complex Programmable Logic Device (CPLD). The processor may also adopt a multi-core architecture.

The processor, by invoking computer programs stored in the memory, is configured to implement any method provided by the embodiments of the present disclosure according to the obtained executable instructions. The processor and the memory may also be physically separated.

Optionally, the transceiver is configured to, under the control of the processor, transmit and receive information and perform the following operation:
Receive a first message sent by the first device, the first message carrying the first information;
Wherein the first message is used to create or update terminal information.

Optionally, the transceiver is configured to, under the control of the processor, transmit and receive information and further perform the following operation:
Before receiving the first message sent by the first device, upon determining that terminal information needs to be acquired, send a second message to the first device, the second message being used to indicate subscription to or query of terminal information, and the second message carrying identification information of the terminal.

Optionally, the second message further comprises at least one of the following:
A type of the terminal information;
Indication information for requesting characteristic information of an environment where the terminal is located.

Optionally, the terminal information comprises at least one of the following:
Subscription information of the terminal;
Mobility-related information;
Session management-related information;
Service-related information;
Application-related information;
Artificial intelligence (AI)-related information;
Machine learning (ML)-related information.

Optionally, the first information further comprises: characteristic information of an environment where the terminal is located.

Optionally, the processor is configured to read the computer program in the memory and further perform the following operation:
Create or update an environment simulator of the terminal according to the characteristic information of the environment where the terminal is located, the environment simulator being used to train the information model.

At least one embodiment of the present disclosure further provides a communication device, wherein the communication device is a first network function entity, comprising a memory, a processor, and a computer program stored in the memory and executable on the processor. When the processor executes the program, it implements the various processes in the embodiments of the information processing method and can achieve the same technical effects. To avoid repetition, details are not repeated here.

At least one embodiment of the present disclosure further provides a computer-readable storage medium, having a computer program stored thereon. When the program is executed by a processor, it implements the various processes in the information processing method embodiments described above and can achieve the same technical effects. To avoid repetition, details are not repeated here. The computer-readable storage medium includes, for example, Read-Only Memory (ROM), Random Access Memory (RAM), magnetic disk, or optical disk.

As shown in FIG. 13, an embodiment of the present disclosure provides an information transmission apparatus 1300, executed by a first device, comprising:
A first sending unit 1301, configured to send first information of a terminal to a first network function entity, the first information comprising terminal information, the terminal information being used by the first network function entity to create or update an information model of the terminal;
The first device comprises at least one of the following:
   A terminal, or a second network function entity different from the first network function entity.

Optionally, the first sending unit 1301 is configured to:
Send a first message to the first network function entity, the first message carrying the first information;
The first message is used to create or update terminal information.

Optionally, before the first sending unit 1301 sends the first message to the first network function entity, the apparatus further comprises:
A receiving unit, configured to receive a second message sent by the first network function entity, the second message being used to indicate subscription to or query of terminal information, and the second message carrying identification information of the terminal;
Wherein the second message is sent by the first network function entity upon determining that terminal information needs to be acquired.

Optionally, the second message further comprises at least one of the following:
A type of the terminal information;
Indication information for requesting characteristic information of an environment where the terminal is located.

Optionally, the terminal information comprises at least one of the following:
Subscription information of the terminal;
Mobility-related information;
Session management-related information;
Service-related information;
Application-related information;
Artificial intelligence (AI)-related information;
Machine learning (ML)-related information.

Optionally, the first information further comprises: characteristic information of an environment where the terminal is located.

It should be noted that: The division of units in the embodiments of the present disclosure is schematic, merely representing a logical functional division. Actual implementations may adopt other division methods. In addition, functional units in various embodiments of the present disclosure may be integrated into one processing unit, or each unit may exist physically alone, or two or more units may be integrated into one unit. The above integrated units may be implemented in the form of hardware or software functional units.

If the integrated unit is implemented in the form of a software functional unit and sold or used as an independent product, it may be stored in a processor-readable storage medium. Based on this understanding, the technical solution of the present disclosure, in essence, or the part contributing to the related art, or all or part of the technical solution may be embodied in the form of a software product. The computer software product is stored in a storage medium and comprises instructions for causing a computer device (which may be a personal computer, server, network device, etc.) or a processor to execute all or part of the steps of the methods described in the various embodiments of the present disclosure. The aforementioned storage medium includes various media that can store program codes, such as: U disk, mobile hard disk, Read-Only Memory (ROM), Random Access Memory (RAM), magnetic disk, or optical disk.

An embodiment of the present disclosure further provides a communication device, wherein the communication device is a first device. The structure of this first device may refer to FIG. 12, and details are not repeated here.

The transceiver is configured to, under the control of the processor, transmit and receive information and perform the following operation:
Send first information of a terminal to a first network function entity, the first information comprising terminal information, the terminal information being used by the first network function entity to create or update an information model of the terminal;
The first device comprises at least one of the following:
   A terminal, or a second network function entity different from the first network function entity.

Optionally, the processor is configured to read the computer program in the memory and perform the following operation:
Send, via the transceiver, a first message to the first network function entity, the first message carrying the first information;
The first message is used to create or update terminal information.

Optionally, the transceiver is configured to, under the control of the processor, transmit and receive information and further perform the following operation:
Before sending the first message to the first network function entity, receive a second message sent by the first network function entity, the second message being used to indicate subscription to or query of terminal information, and the second message carrying identification information of the terminal;
Wherein the second message is sent by the first network function entity upon determining that terminal information needs to be acquired.

Optionally, the second message further comprises at least one of the following:
A type of the terminal information;
Indication information for requesting characteristic information of an environment where the terminal is located.

Optionally, the terminal information comprises at least one of the following:
Subscription information of the terminal;
Mobility-related information;
Session management-related information;
Service-related information;
Application-related information;
Artificial intelligence (AI)-related information;
Machine learning (ML)-related information.

Optionally, the first information further comprises: characteristic information of an environment where the terminal is located.

At least one embodiment of the present disclosure further provides a communication device, wherein the communication device is a first device, comprising a memory, a processor, and a computer program stored in the memory and executable on the processor. When the processor executes the program, it implements the various processes in the embodiments of the information transmission method and can achieve the same technical effects. To avoid repetition, details are not repeated here.

At least one embodiment of the present disclosure further provides a computer-readable storage medium, having a computer program stored thereon. When the program is executed by a processor, it implements the various processes in the information transmission method embodiments described above and can achieve the same technical effects. To avoid repetition, details are not repeated here. The computer-readable storage medium includes, for example, Read-Only Memory (ROM), Random Access Memory (RAM), magnetic disk, or optical disk.

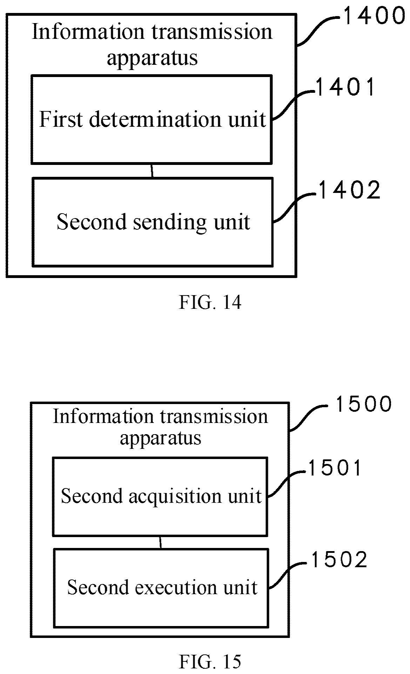

As shown in FIG. 14, an embodiment of the present disclosure provides an information transmission apparatus 1400, executed by a first network function entity, comprising:
A first determination unit 1401, configured to determine second information based on an information model of a target terminal;
A second sending unit 1402, configured to send the second information to a third network function entity, so that the third network function entity, based on the second information, performs a first operation, the second information comprising: terminal information of the target terminal;
Wherein the first operation comprises at least one of the following:
   Wireless access control for the target terminal;
   Communication resource control for the target terminal;
   Connection control for the target terminal;
   Session control for the target terminal;
   Task control for the target terminal;
   Communication policy control for the target terminal.

Optionally, the second sending unit 1402 is configured to:
Receive a third message sent by the third network function entity, the third message being used to request terminal information of the target terminal;
Determine the second information based on the third message and the information model of the target terminal;
Send the second information to the third network function entity.

Optionally, the second information further comprises: characteristic information of an environment where the target terminal is located.

It should be noted that: The division of units in the embodiments of the present disclosure is schematic, merely representing a logical functional division. Actual implementations may adopt other division methods. In addition, functional units in various embodiments of the present disclosure may be integrated into one processing unit, or each unit may exist physically alone, or two or more units may be integrated into one unit. The above integrated units may be implemented in the form of hardware or software functional units.

If the integrated unit is implemented in the form of a software functional unit and sold or used as an independent product, it may be stored in a processor-readable storage medium. Based on this understanding, the technical solution of the present disclosure, in essence, or the part contributing to the related art, or all or part of the technical solution may be embodied in the form of a software product. The computer software product is stored in a storage medium and comprises instructions for causing a computer device (which may be a personal computer, server, network device, etc.) or a processor to execute all or part of the steps of the methods described in the various embodiments of the present disclosure. The aforementioned storage medium includes various media that can store program codes, such as: U disk, mobile hard disk, Read-Only Memory (ROM), Random Access Memory (RAM), magnetic disk, or optical disk.

An embodiment of the present disclosure further provides a communication device, wherein the communication device is a first network function entity. The structure of this first network function entity may refer to FIG. 12, and details are not repeated here.

The processor is configured to read the computer program in the memory and perform the following operations:
Determine second information based on an information model of a target terminal;
Send the second information to a third network function entity, so that the third network function entity, based on the second information, performs a first operation, the second information comprising: terminal information of the target terminal;
Wherein the first operation comprises at least one of the following:
   Wireless access control for the target terminal;
   Communication resource control for the target terminal;
   Connection control for the target terminal;
   Session control for the target terminal;
   Task control for the target terminal;
   Communication policy control for the target terminal.

Optionally, the transceiver is configured to, under the control of the processor, transmit and receive information and perform the following operations:
Receive a third message sent by the third network function entity, the third message being used to request terminal information of the target terminal;
Determine the second information based on the third message and the information model of the target terminal;
Send the second information to the third network function entity.

Optionally, the second information further comprises: characteristic information of an environment where the target terminal is located.

At least one embodiment of the present disclosure further provides a communication device, wherein the communication device is a first network function entity, comprising a memory, a processor, and a computer program stored in the memory and executable on the processor. When the processor executes the program, it implements the various processes in the embodiments of the information transmission method and can achieve the same technical effects. To avoid repetition, details are not repeated here.

At least one embodiment of the present disclosure further provides a computer-readable storage medium, having a computer program stored thereon. When the program is executed by a processor, it implements the various processes in the information transmission method embodiments described above and can achieve the same technical effects. To avoid repetition, details are not repeated here. The computer-readable storage medium includes, for example, Read-Only Memory (ROM), Random Access Memory (RAM), magnetic disk, or optical disk.

As shown in FIG. 15, an embodiment of the present disclosure provides an information transmission apparatus 1500, executed by a third network function entity, comprising:
A second acquisition unit 1501, configured to acquire second information, the second information comprising: terminal information of a target terminal, the second information being determined based on an information model of the target terminal;
A second execution unit 1502, configured to perform a first operation according to the second information;
Wherein the first operation comprises at least one of the following:
   Wireless access control for the target terminal;
   Communication resource control for the target terminal;
   Connection control for the target terminal;
   Session control for the target terminal;
   Task control for the target terminal;
   Communication policy control for the target terminal.

Optionally, the second execution unit 1502 is configured to:
Acquire third information, the third information comprising: communication resource information and/or communication policy information of the target terminal;
Perform the first operation according to the second information and the third information.

Optionally, the second information further comprises: characteristic information of an environment where the target terminal is located.

It should be noted that: The division of units in the embodiments of the present disclosure is schematic, merely representing a logical functional division. Actual implementations may adopt other division methods. In addition, functional units in various embodiments of the present disclosure may be integrated into one processing unit, or each unit may exist physically alone, or two or more units may be integrated into one unit. The above integrated units may be implemented in the form of hardware or software functional units.

If the integrated unit is implemented in the form of a software functional unit and sold or used as an independent product, it may be stored in a processor-readable storage medium. Based on this understanding, the technical solution of the present disclosure, in essence, or the part contributing to the related art, or all or part of the technical solution may be embodied in the form of a software product. The computer software product is stored in a storage medium and comprises instructions for causing a computer device (which may be a personal computer, server, network device, etc.) or a processor to implement all or part of the steps of the methods described in the various embodiments of the present disclosure. The aforementioned storage medium includes various media that can store program codes, such as: U disk, mobile hard disk, Read-Only Memory (ROM), Random Access Memory (RAM), magnetic disk, or optical disk.

An embodiment of the present disclosure further provides a communication device, wherein the communication device is a third network function entity. The structure of this third network function entity may refer to FIG. 12, and details are not repeated here.

The processor is configured to read the computer program in the memory and perform the following operations:
Acquire second information, the second information comprising: terminal information of a target terminal, the second information being determined based on an information model of the target terminal;
perform a first operation according to the second information;
Wherein the first operation comprises at least one of the following:
   Wireless access control for the target terminal;
   Communication resource control for the target terminal;
   Connection control for the target terminal;
   Session control for the target terminal;
   Task control for the target terminal;
   Communication policy control for the target terminal.

Optionally, the processor is configured to read the computer program in the memory and further perform the following operations:
Acquire third information, the third information comprising: communication resource information and/or communication policy information of the target terminal;
Perform the first operation according to the second information and the third information.

Optionally, the second information further comprises: characteristic information of an environment where the target terminal is located.

At least one embodiment of the present disclosure further provides a communication device, wherein the communication device is a third network function entity, comprising a memory, a processor, and a computer program stored in the memory and executable on the processor. When the processor executes the program, it implements the various processes in the embodiments of the information transmission method and can achieve the same technical effects. To avoid repetition, details are not repeated here.

At least one embodiment of the present disclosure further provides a computer-readable storage medium, having a computer program stored thereon. When the program is executed by a processor, it implements the various processes in the information transmission method embodiments described above and can achieve the same technical effects. To avoid repetition, details are not repeated here. The computer-readable storage medium includes, for example, Read-Only Memory (ROM), Random Access Memory (RAM), magnetic disk, or optical disk.

Those skilled in the art should understand that embodiments of the present disclosure may be provided as a method, a system, or a computer program product. Accordingly, the present disclosure may take the form of an entirely hardware embodiment, an entirely software embodiment, or an embodiment combining software and hardware aspects. Furthermore, the present disclosure may take the form of a computer program product implemented on one or more computer-usable storage media (including, but not limited to, disk storage, optical storage, etc.) having computer-usable program code embodied therein.

The present disclosure is described with reference to flowcharts and/or block diagrams of methods, devices (systems), and computer program products according to embodiments of the present disclosure. It should be understood that each flow and/or block in the flowcharts and/or block diagrams, and combinations of flows and/or blocks in the flowcharts and/or block diagrams, can be implemented by computer-executable instructions. These computer-executable instructions may be provided to a processor of a general-purpose computer, special-purpose computer, embedded processor, or other programmable data processing device to produce a machine, such that the instructions, which execute via the processor of the computer or other programmable data processing device, create means for implementing the functions specified in one or more flows of the flowchart and/or one or more blocks of the block diagram.

These processor-executable instructions may also be stored in a processor-readable memory that can direct a computer or other programmable data processing device to function in a particular manner, such that the instructions stored in the processor-readable memory produce an article of manufacture including instruction means which implement the function specified in one or more flows of the flowchart and/or one or more blocks of the block diagram.

These processor-executable instructions may also be loaded onto a computer or other programmable data processing device to cause a series of operational steps to be performed on the computer or other programmable device to produce computer-implemented processing, such that the instructions executed on the computer or other programmable device provide steps for implementing the functions specified in one or more flows of the flowchart and/or one or more blocks of the block diagram.

It should be noted that: It should be understood that the division of the above modules is merely a division of logical functions. In actual implementation, they may be fully or partially integrated into a single physical entity, or may be physically separated. Furthermore, these modules may all be implemented in software executed by processing elements; or entirely in hardware; or some modules may be implemented in software executed by processing elements while others are implemented in hardware. For example, a determination module may be a separately established processing element, or may be integrated into a chip of the above-mentioned apparatus. Alternatively, it may be stored in the memory of the above-mentioned apparatus in the form of program code and invoked and executed by a processing element of the apparatus to perform the functions of the determination module. The implementation of other modules is similar. Additionally, these modules may be fully or partially integrated together, or implemented independently. The processing element mentioned here may be an integrated circuit with signal processing capability. In the implementation process, the steps of the above method or the various modules may be completed by an integrated logic circuit of hardware in a processor element or by instructions in the form of software.

For instance, each module, unit, subunit, or submodule may be one or more integrated circuits configured to implement the above method, such as: one or more Application Specific Integrated Circuits (ASICs), or one or more digital signal processors (DSPs), or one or more Field Programmable Gate Arrays (FPGAs), etc. As another example, when a module is implemented in the form of program code executed by a processing element, the processing element may be a general-purpose processor, such as a Central Processing Unit (CPU) or other processor capable of executing program code. Furthermore, these modules may be integrated together and implemented as a System-on-a-Chip (SOC).

The terms "first," "second," etc., in the specification and claims of the present disclosure are used to distinguish similar objects and are not necessarily used to describe a specific order or sequence. It should be understood that the data so used may be interchanged under appropriate circumstances so that the embodiments of the present disclosure described herein can be implemented in sequences other than those illustrated or described herein. Moreover, the terms "comprise," "include," "have," and any variations thereof are intended to cover non-exclusive inclusion. For example, a process, method, system, product, or device that comprises a series of steps or units is not necessarily limited to those steps or units explicitly listed, but may include other steps or units not explicitly listed or inherent to such process, method, product, or device. Additionally, the use of "and/or" in the specification and claims indicates at least one of the connected objects. For example, "A and/or B and/or C" means any one of the seven scenarios: A alone, B alone, C alone, both A and B, both B and C, both A and C, or all of A, B, and C. Similarly, the phrase "at least one of A and B" used in this specification and claims should be understood as "A alone, B alone, or both A and B".

It is apparent that those skilled in the art can make various modifications and variations to the present disclosure without departing from the spirit and scope of the present disclosure. Thus, if such modifications and variations of the present disclosure fall within the scope of the claims of the present disclosure and their equivalents, the present disclosure is also intended to cover these modifications and variations.

## Claims

1. An information processing method, performed by a first network function entity, the method comprising:
acquiring first information of a terminal from a first device, the first information comprising terminal information;
creating or updating an information model of the terminal based on the terminal information;
the first device comprises at least one of:
a terminal, or a second network function entity different from the first network function entity.

2. The method according to claim 1, wherein the acquiring first information of a terminal from a first device comprises:
receiving a first message sent by the first device, the first message carrying the first information;
wherein the first message is used for creating or updating terminal information.

3. The method according to claim 2, wherein before the receiving a first message sent by the first device, the method further comprises:
sending a second message to the first device upon determining a need to acquire terminal information, the second message used to indicate subscription to or querying of terminal information, the second message carrying identification information of the terminal.

4. The method according to claim 3, wherein the second message further comprises at least one of:
a type of terminal information;
indication information for requesting characteristic information of an environment where the terminal is located.

5. The method according to any one of claims 1-4, wherein the terminal information comprises at least one of:
subscription information of the terminal;
mobility-related information;
session management-related information;
service-related information;
application-related information;
Artificial Intelligence (AI)-related information;
Machine Learning (ML)-related information.

6. The method according to any one of claims 1-4, wherein the first information further comprises: characteristic information of an environment where the terminal is located.

7. The method according to claim 6, wherein the method further comprises:
creating or updating an environment simulator of the terminal based on the characteristic information of the environment where the terminal is located, the environment simulator being used to train the information model.

8. An information transmission method, performed by a first device, the method comprising:
sending first information of a terminal to a first network function entity, the first information comprising terminal information, the terminal information being used by the first network function entity to create or update an information model of the terminal;
the first device comprises at least one of:
a terminal, or a second network function entity different from the first network function entity.

9. The method according to claim 8, wherein the sending first information of a terminal to a first network function entity comprises:
sending a first message to the first network function entity, the first message carrying the first information;
the first message is used for creating or updating terminal information.

10. The method according to claim 9, wherein before the sending a first message to the first network function entity, the method further comprises:
receiving a second message sent by the first network function entity, the second message used to indicate subscription to or querying of terminal information, the second message carrying identification information of the terminal;
wherein the second message is sent by the first network function entity upon determining a need to acquire terminal information.

11. An information transmission method, performed by a first network function entity, the method comprising:
determining second information based on an information model of a target terminal;
sending the second information to a third network function entity, causing the third network function entity to perform a first operation based on the second information, the second information comprising: terminal information of the target terminal;
wherein the first operation comprises at least one of:
wireless access control for the target terminal;
communication resource control for the target terminal;
connection control for the target terminal;
session control for the target terminal;
task control for the target terminal;
communication policy control for the target terminal.

12. The method according to claim 11, wherein the sending the second information to a third network function entity comprises:
receiving a third message sent by the third network function entity, the third message used to request terminal information of the target terminal;
determining the second information based on the third message and the information model of the target terminal;
sending the second information to the third network function entity.

13. The method according to claim 11 or 12, wherein the second information further comprises: characteristic information of an environment where the target terminal is located.

14. An information transmission method, performed by a third network function entity, the method comprising:
acquiring second information, the second information comprising: terminal information of a target terminal, the second information being determined based on an information model of the target terminal;
performing a first operation according to the second information;
wherein the first operation comprises at least one of:
wireless access control for the target terminal;
communication resource control for the target terminal;
connection control for the target terminal;
session control for the target terminal;
task control for the target terminal;
communication policy control for the target terminal.

15. The method according to claim 14, wherein the performing a first operation according to the second information comprises:
acquiring third information, the third information comprising: communication resource information and/or communication policy information of the target terminal;
performing the first operation according to the second information and the third information.

16. A communication device, wherein the communication device is a first network function entity, comprising a memory, a transceiver, and a processor:
the memory is configured to store a computer program;
the transceiver is configured to transmit and receive information under control of the processor;
the processor is configured to read the computer program in the memory and perform the following operations:
acquire first information of a terminal from a first device, the first information comprising terminal information;
create or update an information model of the terminal based on the terminal information;
the first device comprises at least one of:
a terminal, or a second network function entity different from the first network function entity.

17. The communication device according to claim 16, wherein the transceiver is configured to transmit and receive information under control of the processor and perform the following operation:
receive a first message sent by the first device, the first message carrying the first information;
wherein the first message is used for creating or updating terminal information.

18. The communication device according to claim 17, wherein the transceiver is configured to transmit and receive information under control of the processor and further perform the following operation:
before receiving the first message sent by the first device, send a second message to the first device upon determining a need to acquire terminal information, the second message used to indicate subscription to or querying of terminal information, the second message carrying identification information of the terminal.

19. The communication device according to claim 18, wherein the second message further comprises at least one of:
a type of terminal information;
indication information for requesting characteristic information of an environment where the terminal is located.

20. The communication device according to any one of claims 16-19, wherein the terminal information comprises at least one of:
subscription information of the terminal;
mobility-related information;
session management-related information;
service-related information;
application-related information;
Artificial Intelligence (AI)-related information;
Machine Learning (ML)-related information.

21. The communication device according to any one of claims 16-19, wherein the first information further comprises: characteristic information of an environment where the terminal is located.

22. The communication device according to claim 21, wherein the processor is configured to read the computer program in the memory and further perform the following operation:
create or update an environment simulator of the terminal based on the characteristic information of the environment where the terminal is located, the environment simulator being used to train the information model.

23. A communication device, wherein the communication device is a first device, comprising a memory, a transceiver, and a processor:
the memory is configured to store a computer program;
the transceiver is configured to transmit and receive information under control of the processor and perform the following operation:
send first information of a terminal to a first network function entity, the first information comprising terminal information, the terminal information being used by the first network function entity to create or update an information model of the terminal;
the first device comprises at least one of:
a terminal, or a second network function entity different from the first network function entity.

24. The communication device according to claim 23, wherein the processor is configured to read the computer program in the memory and perform the following operation:
send a first message to the first network function entity via the transceiver, the first message carrying the first information;
the first message is used for creating or updating terminal information.

25. The communication device according to claim 24, wherein the transceiver is configured to transmit and receive information under control of the processor and further perform the following operation:
before sending the first message to the first network function entity, receive a second message sent by the first network function entity, the second message used to indicate subscription to or querying of terminal information, the second message carrying identification information of the terminal;
wherein the second message is sent by the first network function entity upon determining a need to acquire terminal information.

26. A communication device, wherein the communication device is a first network function entity, comprising a memory, a transceiver, and a processor:
the memory is configured to store a computer program;
the transceiver is configured to transmit and receive information under control of the processor;
the processor is configured to read the computer program in the memory and perform the following operations:
determine second information based on an information model of a target terminal;
send the second information to a third network function entity, causing the third network function entity to perform a first operation based on the second information, the second information comprising: terminal information of the target terminal;
wherein the first operation comprises at least one of:
wireless access control for the target terminal;
communication resource control for the target terminal;
connection control for the target terminal;
session control for the target terminal;
task control for the target terminal;
communication policy control for the target terminal.

27. The communication device according to claim 26, wherein the transceiver is configured to transmit and receive information under control of the processor and perform the following operations:
receive a third message sent by the third network function entity, the third message used to request terminal information of the target terminal;
determine the second information based on the third message and the information model of the target terminal;
send the second information to the third network function entity.

28. The communication device according to claim 26 or 27, wherein the second information further comprises: characteristic information of an environment where the target terminal is located.

29. A communication device, wherein the communication device is a third network function entity, comprising a memory, a transceiver, and a processor:
the memory is configured to store a computer program;
the transceiver is configured to transmit and receive information under control of the processor;
the processor is configured to read the computer program in the memory and perform the following operations:
acquire second information, the second information comprising: terminal information of a target terminal, the second information being determined based on an information model of the target terminal;
perform a first operation according to the second information;
wherein the first operation comprises at least one of:
wireless access control for the target terminal;
communication resource control for the target terminal;
connection control for the target terminal;
session control for the target terminal;
task control for the target terminal;
communication policy control for the target terminal.

30. The communication device according to claim 29, wherein the processor is configured to read the computer program in the memory and perform the following operations:
acquire third information, the third information comprising: communication resource information and/or communication policy information of the target terminal;
perform the first operation according to the second information and the third information.

31. An information processing apparatus, applied to a first network function entity, the apparatus comprising:
a first acquisition unit, configured to acquire first information of a terminal from a first device, the first information comprising terminal information;
a first execution unit, configured to create or update an information model of the terminal based on the terminal information;
the first device comprises at least one of:
a terminal, or a second network function entity different from the first network function entity.

32. The apparatus according to claim 31, wherein the first acquisition unit is configured to:
receive a first message sent by the first device, the first message carrying the first information;
wherein the first message is used for creating or updating terminal information.

33. The apparatus according to claim 32, wherein before the first acquisition unit receives the first message sent by the first device, the apparatus further comprises:
a third sending unit, configured to send a second message to the first device upon determining a need to acquire terminal information, the second message used to indicate subscription to or querying of terminal information, the second message carrying identification information of the terminal.

34. The apparatus according to claim 33, wherein the second message further comprises at least one of:
a type of terminal information;
indication information for requesting characteristic information of an environment where the terminal is located.

35. The apparatus according to any one of claims 31-34, wherein the terminal information comprises at least one of:
subscription information of the terminal;
mobility-related information;
session management-related information;
service-related information;
application-related information;
Artificial Intelligence (AI)-related information;
Machine Learning (ML)-related information.

36. The apparatus according to any one of claims 31-34, wherein the first information further comprises: characteristic information of an environment where the terminal is located.

37. The apparatus according to claim 36, wherein the apparatus further comprises:
a third execution unit, configured to update or create an environment simulator of the terminal based on the characteristic information of the environment where the terminal is located, the environment simulator being used to train the information model.

38. An information transmission apparatus, applied to a first device, the apparatus comprising:
a first sending unit, configured to send first information of a terminal to a first network function entity, the first information comprising terminal information, the terminal information being used by the first network function entity to create or update an information model of the terminal;
the first device comprises at least one of:
a terminal, or a second network function entity different from the first network function entity.

39. The apparatus according to claim 38, wherein the first sending unit is configured to:
send a first message to the first network function entity, the first message carrying the first information;
the first message is used for creating or updating terminal information.

40. The apparatus according to claim 39, wherein before the first sending unit sends the first message to the first network function entity, the apparatus further comprises:
a receiving unit, configured to receive a second message sent by the first network function entity, the second message used to indicate subscription to or querying of terminal information, the second message carrying identification information of the terminal;
wherein the second message is sent by the first network function entity upon determining a need to acquire terminal information.

41. An information transmission apparatus, applied to a first network function entity, the apparatus comprising:
a first determination unit, configured to determine second information based on an information model of a target terminal;
a second sending unit, configured to send the second information to a third network function entity, causing the third network function entity to perform a first operation based on the second information, the second information comprising: terminal information of the target terminal;
wherein the first operation comprises at least one of:
wireless access control for the target terminal;
communication resource control for the target terminal;
connection control for the target terminal;
session control for the target terminal;
task control for the target terminal;
communication policy control for the target terminal.

42. The apparatus according to claim 41, wherein the second sending unit is configured to:
receive a third message sent by the third network function entity, the third message used to request terminal information of the target terminal;
determine the second information based on the third message and the information model of the target terminal;
send the second information to the third network function entity.

43. The apparatus according to claim 41 or 42, wherein the second information further comprises: characteristic information of an environment where the target terminal is located.

44. An information transmission apparatus, applied to a third network function entity, the apparatus comprising:
a second acquisition unit, configured to acquire second information, the second information comprising: terminal information of a target terminal, the second information being determined based on an information model of the target terminal;
a second execution unit, configured to perform a first operation according to the second information;
wherein the first operation comprises at least one of:
wireless access control for the target terminal;
communication resource control for the target terminal;
connection control for the target terminal;
session control for the target terminal;
task control for the target terminal;
communication policy control for the target terminal.

45. The apparatus according to claim 44, wherein the second execution unit is configured to:
acquire third information, the third information comprising: communication resource information and/or communication policy information of the target terminal;
perform the first operation according to the second information and the third information.

46. A processor-readable storage medium, wherein the processor-readable storage medium stores a computer program, the computer program being configured to cause a processor to implement the method according to any one of claims 1 to 15.
